# EUROPÄISCHE PATENTSCHRIFT

(11) **EP 3 788 594 B1**
(45) Veröffentlichungstag und Bekanntmachung des Hinweises auf die Patenterteilung: **08.06.2022**
(21) Anmeldenummer: 19721982.7
(22) Anmeldetag: 16.04.2019
(51) Int. Cl.: G06T 7/12

(54) **KONTURERKENNUNG EINES FAHRZEUGS ANHAND VON MESSDATEN EINER UMFELDSENSORIK**
IDENTIFYING THE CONTOUR OF A VEHICLE ON THE BASIS OF MEASUREMENT DATA FROM AN ENVIRONMENT SENSOR SYSTEM
DÉTECTION DU CONTOUR D'UN VÉHICULE EN FONCTION DE DONNÉES DE MESURE D'UN SYSTÈME DE DÉTECTION D'ENVIRONNEMENT

(30) Priorität: 02.05.2018 DE 102018206751
(43) Veröffentlichungstag der Anmeldung: 10.03.2021
(73) Patentinhaber: Continental Automotive GmbH, 30165 Hannover (DE)
(72) Erfinder: FESER, Michael, 90411 Nürnberg (DE); SCHNEIDER, Kilian, 90411 Nürnberg (DE); BRANDMEIER, Thomas, 90411 Nürnberg (DE); KAMANN, Alexander, 90411 Nürnberg (DE); LUGNER, Robert, 90411 Nürnberg (DE); WEICHSELBERGER, Daniel, 90411 Nürnberg (DE); NAUMANN, Robert, 90411 Nürnberg (DE)
(74) Vertreter: Continental Corporation
(86) Internationale Anmeldenummer: PCT/DE2019/200031
(87) Internationale Veröffentlichungsnummer: WO 2019/210916

(56) Entgegenhaltungen:
- RIEKEN JENS ET AL: "Toward Perception-Driven Urban Environment Modeling for Automated Road Vehicles", 2015 IEEE 18TH INTERNATIONAL CONFERENCE ON INTELLIGENT TRANSPORTATION SYSTEMS, IEEE, 15. September 2015 (2015-09-15), Seiten 731-738, XP032804083, DOI: 10.1109/ITSC.2015.124 [gefunden am 2015-10-30]

## Beschreibung

Die vorliegende Offenbarung betrifft eine Konturerkennung eines Fahrzeugs anhand von Messdaten einer Umfeldsensorik.

In modernen Fahrzeugen, die für ein zumindest teilautonomes Fahren eingerichtet sind, werden zunehmend Sensoren und Sensorsysteme zum Erfassen anderer Verkehrsteilnehmer eingesetzt. Als Sensoren kommen insbesondere Kameras, Radar- und teilweise auch Lidar-Sensoren zum Einsatz. Ein Lidar-Sensor tastet mittels Laserstrahlung einen bestimmten räumlichen Erfassungsbereich ab und kann anhand der von Objekten im Erfassungsbereich reflektierten Laserstrahlung Raumpunkte der Objekte ermitteln. Die Raumpunkte werden nachfolgend auch als 3D-Messpunkte bezeichnet, da sie Raumkoordinaten aufweisen.

Die von derartigen Sensoren erzeugten Daten werden von Fahrerassistenzsystemen algorithmisch verarbeitet, insbesondere um Objekte im Fahrkorridor eines Fahrzeugs zu erkennen und mögliche Unfälle mit erkannten Objekten zu vermeiden. Die in Fahrerassistenzsystemen eingesetzten Algorithmen sind üblicherweise dazu ausgebildet, anhand von Sensordaten erkannte Objekte durch sogenannte "bounding boxes", also Hüllkörper in Form einer Schachtel im Raum bzw. eines Rechtecks in der Ebene, für die weitere algorithmische Verarbeitung zu markieren.

Beispielsweise offenbart die DE 10 2013 008 828 A1 ein Verfahren zur Konturerkennung eines Fahrzeugs anhand von Messdaten einer Umfeldsensorik, wobei die Messdaten eine Menge von Konturpunkten eines erfassten Fahrzeugs aufweisen. Anhand der Konturpunkte wird ein das Fahrzeug einhüllendes Rechteck oder Polygon gebildet, wobei für die weitere Verarbeitung diejenigen Konturpunkte bestimmt werden, die für die Konturerkennung des Fahrzeugs relevant sind. Hierzu wird jeweils für jede Reihe und Spalte einer gebildeten Gitterkarte die Anzahl der in dieser Reihe bzw. Spalte liegenden Konturpunkte bestimmt. Beispielsweise bildet diejenige Spalte, welche in der linken Hälfte der Gitterkarte liegt und die meisten Konturpunkte aufweist, die linke Kante des die Fahrzeugkontur beschreibenden Rechtecks und es bildet diejenige Reihe, welche in der unteren Hälfte der Gitterkarte liegt und die meisten Konturpunkte aufweist, die untere Kante des die Fahrzeugkontur beschreibenden Rechtecks.

Die Detektion von Fahrzeugen in LIDAR Messdaten ist beschrieben in "Toward Perception-Driven Urban Environment Modeling for Automated Road Vehicles" von Rieken et al in 2015 IEEE 18th International Conference on Intelligent Transportation Systems, 2015, S. 731-738. Dabei wird die Außenkontur eines Fahrzeugs durch ein Bounding Box Modell mit Polygonzügen angenähert, wobei zwischen der Vorderseite, Rückseite und Seite unterschieden wird.

Nachfolgend werden nun ein erfindungsgemäßes Verfahren zur Konturerkennung eines Fahrzeugs anhand von Messdaten einer Umfeldsensorik sowie ein erfindungsgemäßes Sicherheitssystem für ein Fahrzeug beschrieben.

Gemäß einem ersten Aspekt wird ein computer-implementiertes Verfahren zur Konturerkennung eines Fahrzeugs anhand von Messdaten einer Umfeldsensorik gemäss Anspruch 1 offenbart, wobei die Messdaten eine Menge von Raumpunkten eines von der Umfeldsensorik erfassten Objekts aufweisen. Das offenbarte Verfahren weist folgendes auf: Erzeugen einer Hülle um das Objekt in Form eines Polygonzuges anhand der Menge von Raumpunkten; Reduzieren der Menge von Raumpunkten durch Löschen aller innerhalb der Hülle befindlicher Raumpunkte; Entfernen von Raumpunkten aus dem Polygonzug, die für die Konturerkennung eines Fahrzeugs irrelevant sind, und Bestimmen von Raumpunkten des Polygonzuges, die für die Konturerkennung eines Fahrzeugs relevant sind; Klassifizieren von einer oder mehreren Kanten des Polygonzugs als zu einer Front und Seite eines Fahrzeugs gehörig anhand der reduzierten Menge von Raumpunkten. Die obigen Handlungen können insbesondere als Schritte eines Algorithmus in der angegebenen Reihenfolge ausgeführt werden. Die Hülle kann beispielsweise eine konvexe Hülle sein oder durch einen kubisch hermiteschen Spline gebildet sein. Die durch das Verfahren erkannte Kontur eines Fahrzeugs ist im Unterschied zu einer relativ ungenauen Bounding box vor allem dann von Vorteil, wenn wie es wie beispielsweise bei der Ansteuerung passiver Sicherheitselemente auf eine möglichst zuverlässige Prädiktion eines Unfalls ankommt. Beispielsweise können anhand der erkannten Kontur eines anderen Fahrzeugs die Wahrscheinlichkeit für einen Zusammenstoß zwischen dem Ego-Fahrzeug und dem anderen Fahrzeug genauer abgeschätzt und das Ansteuern eines passiven Sicherheitselements dadurch verbessert werden, dass insbesondere unnötige oder falsche Auslösungen des passiven Sicherheitselements vermieden oder sogenannte Pre-Crash-Auslösungen genauer eingestellt werden können.

Das Verfahren kann zudem folgendes aufweisen: Komplementieren einer vollständigen Form eines Fahrzeugs über die Schätzung einer Mittelachse des Fahrzeugs anhand der klassifizierten Kanten. Hierdurch kann die Konturerkennung weiter verbessert werden, da eine noch genauere Kontur des Fahrzeugs erhalten wird.

Insbesondere kann das Erzeugen einer Hülle um das Objekt in Form eines Polygonzuges anhand der Menge von Raumpunkten das Durchführen eines Graham-Scan-Algorithmus auf die Menge von Raumpunkten aufweisen. Der Graham-Scan-Algorithmus ermöglicht die effiziente Berechnung der Hülle um das Objekt auch bei relativ großen Datenmengen, wie sie beispielsweise von einer Lidar-basierten Umfeldsensorik erzeugt werden können.

Das Entfernen von Raumpunkten aus dem Polygonzug, die für die Konturerkennung eines Fahrzeugs irrelevant sind, weist folgendes auf: Löschen von Raumpunkten auf der Hülle, deren Verbindungsgeraden zu benachbarten Raumpunkten des Polygonzuges in einem Winkel zueinanderstehen, der kleiner oder gleich einem vorgegebenen Winkel von insbesondere 2° ist und Verbinden der mit dem gelöschten Raumpunkt verbundenen Raumpunkte im Polygonzug. Hierdurch können Raumpunkte aus dem Polygonzug entfernt werden, die keine Eckpunkte der Fahrzeugkontur darstellen und daher in der Regel für eine Unfall-Prädiktion von wenn überhaupt geringer Bedeutung sind.

Das Bestimmen von Raumpunkten des Polygonzuges, die für die Konturerkennung eines Fahrzeugs relevant sind, kann mindestens eines der folgenden aufweisen: Bestimmen eines Raumpunktes als relevant, wenn seine Verbindungsgeraden zu benachbarten Raumpunkten des Polygonzuges in einem Winkel zueinanderstehen, der größer als ein vorgegebener Winkel von insbesondere 20° ist; Bestimmen eines Raumpunktes als relevant, wenn für den Raumpunkte und mehrere zu ihm benachbarte Raumpunkte im Polygonzug die Summe der Winkel, in dem Verbindungsgeraden zu benachbarten Raumpunkten des Polygonzuges zueinanderstehen, größer als ein vorgegebener Winkel von insbesondere 17,5° ist; Bestimmen eines Raumpunktes als relevant, wenn der Winkel, in dem Verbindungsgeraden zu benachbarten Raumpunkten des Polygonzuges zueinanderstehen, multipliziert mit der Länge wenigstens einer der Verbindungsgeraden einen vorgegebenen Wert von insbesondere 8°m überschreitet. Jede dieser drei Bestimmungsmethoden ermöglicht eine effiziente Ermittlung von für die Konturerkennung relevanten Raumpunkten.

Das Klassifizieren von einer oder mehreren Kanten als zu einer Front und Seite eines Fahrzeugs gehörig anhand der reduzierten Menge von Raumpunkten kann folgende Schritte aufweisen: Sortieren der Verbindungsgeraden der reduzierten Menge der Raumpunkte des Polygonzuges entsprechend ihrer Länge, Vergleichen der beiden längsten Verbindungsgeraden mit einem Front-Parameter *I_{f}* und einem Seiten-Parameter *Iₛ*, und Bestimmen, ob Front und/oder Seite eines Fahrzeugs sichtbar ist bzw. sind.

Insbesondere kann das Bestimmen, ob Front und/oder Seite eines Fahrzeugs sichtbar ist bzw. sind, mindestens eines der folgenden aufweisen: Bestimmen, dass Front und Seite sichtbar sind, wenn die längste Verbindungslinie länger als der Front-Parameter *I_{f}* ist und die zweitlängste Verbindungslinie zwischen dem Front-Parameter *I_{f}* und dem Seiten-Parameter *Iₛ* liegt; Bestimmen, dass nur die Front sichtbar ist, wenn längste Verbindungslinie kürzer als der Seiten-Parameter *Iₛ*, aber länger als der Front-Parameter *I_{f}* ist; Bestimmen, dass nur die Seite sichtbar ist, wenn die längste Verbindungslinie länger als der Front-Parameter *l_{f}* ist und die zweitlängste Verbindungslinie kürzer als der Seiten-Parameter *Iₛ* ist.

Weiterhin kann das Komplementieren einer vollständigen Form eines Fahrzeugs über die Schätzung einer Mittelachse des Fahrzeugs anhand der klassifizierten Kanten folgende Schritte aufweisen: Erzeugen einer Mittelachse durch Legen einer Geraden durch den Mittelpunkt einer klassifizierten Front eines Fahrzeugs derart, dass die Gerade etwa parallel zu einer klassifizierten Seite des Fahrzeugs liegt, Spiegeln der klassifizierten Front und Seite des Fahrzeugs an der Mittelachse, und Überschreiben von Raumpunkten auf der Seite der Mittelachse, auf die gespiegelt wurde, durch die gespiegelten Raumpunkte.

Das Verfahren kann insbesondere zyklisch ausgeführt werden und durch Auswertung der komplementierten vollständigen Formen des Fahrzeugs kann eine Trajektorie des Fahrzeugs ermittelt werden. Beispielsweise kann eine zeitliche Veränderung mehrerer komplementierter vollständiger Fahrzeugformen ermittelt werden, insbesondere die Veränderung des Winkels einer Fahrzeuglängsachse der komplementierten vollständigen Fahrzeugformen, anhand der dann eine Trajektorie des Fahrzeugs abgeleitet werden kann, beispielsweise ob sich das Fahrzeug auf einer am eigenen Fahrzeug vorbeiführenden Trajektorie bewegt. Dies kann dann von einem Sicherheits- oder Fahrerassistenzsystem insbesondere zur Prädiktion eines Unfalls ausgewertet werden.

Gemäß einem zweiten Aspekt wird ein Sicherheitssystem für ein Fahrzeug offenbart, wobei das Sicherheitssystem zum Ausführen eines Verfahrens wie hierin offenbart und zur Ansteuerung von mindestens einem der nachfolgenden Elemente abhängig von der erkannten Kontur des Fahrzeugs ausgebildet ist: mindestens ein passives Sicherheitselement, insbesondere ein Airbag, ein Gurtstraffer; mindesten ein aktives Sicherheitselement, insbesondere ein Bremsassistenzsystem, eine aktive Lenkvorrichtung, ein Antiblockiersystem, ein Fahrdynamikregelsystem.

Das Sicherheitssystem kann insbesondere ausgebildet sein, abhängig von der erkannten Kontur des Fahrzeugs die Wahrscheinlicht für einen Unfall mit dem Fahrzeug abzuschätzen und abhängig von der Abschätzung das Auslösen des mindestens Element zu steuern.

Weitere Merkmale ergeben sich aus der nachfolgenden Beschreibung in Verbindung mit den in den Zeichnungen dargestellten Ausführungsbeispielen.

### KURZE BESCHREIBUNG DER ZEICHNUNGEN

Die Zeichnungen zeigen in
Fig. 1 ein Ego-Fahrzeug mit einer Umfeldsensorik zur Objektdetektion und ein dem Ego-Fahrzeug entgegenkommendes Ziel-Fahrzeug;
Fig. 2 ein Ego-Fahrzeug und ein dem Ego-Fahrzeug entgegenkommendes Ziel-Fahrzeug sowie die Trajektorien der Fahrzeuge bei einem Ausweichmanöver zum Vermeiden eines Unfalls;
Fig. 3 bis 5 Beispiele von Polygonzügen mit Eckpunkten; und
Fig. 6 ein Beispiel einer mit dem Verfahren erkannten Fahrzeugkontur.

### DETAILLIERTE BESCHREIBUNG

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht einschränkend zu verstehen.

Die nachfolgend erläuterten Ausführungsbeispiele sind grundlegend in das Gebiet der Fahrzeugsicherheit für alle Schritte des automatisierten bis hin zum vollständig autonomen Fahren einzuordnen, wobei innerhalb dieser Felder insbesondere das frühzeitige Auslösen von passiven Sicherheitselementen wie Airbags und Gurtstraffern mit Hilfe von Sensoren zur Umfeld- und Kollisionspartnererfassung im Fokus steht. Generell sind die hierin beschriebenen Verfahren und Systeme jedoch für alle Arten von Fahrerassistenzsystemen geeignet, bei denen eine Objekterkennung für die Fahrzeugsicherheit eingesetzt wird, also zum Beispiel auch aktive Sicherheitssysteme, welche die Steuerung des Fahrzeugs zur Unfallvermeidung beeinflussen können, wie beispielsweise automatische Lenk-, Brems- und Fahrdynamikregeleingriffe.

Die Umfelderfassung erfolgt bei aktuell in Fahrzeugen eingesetzten Fahrerassistenzsystemen überwiegend mit Radar und Kamerasensoren, mit deren Informationen beispielsweise bereits Zündschwellen von Aktuatoren passiver Sicherheitselemente herabgesetzt werden können. Die Aktivierung der Aktuatoren findet bisher jedoch immer noch nach dem Zeitpunkt to des ersten Kontakts zweier Unfallpartner statt.

Eine weitere Minimierung der Unfallschwere für die Insassen ist durch das Auslösen von Schutz- und Rückhaltemitteln, beispielsweise Gurtstraffern oder auch Airbags, vor to erreichbar. Hierzu müssen jedoch möglichst viele Informationen über den Kollisionspartner vorliegen. Dazu gehören unter anderem die Geschwindigkeit und die Position, welche mit der genannten Sensorik bestimmbar sind. Weitere relevante Parameter sind jedoch nur sehr eingeschränkt oder gar nicht bestimmbar, weshalb als dritter Umfelderfassungssensor zukünftig ein Lidarsensor (oder auch Laserscanner) in Fahrzeugen Verwendung finden soll. Mit ihm ist es auf Grund der hohen Anzahl an Messpunkten im Raum bzw. 3D-Messpunkten, welche die Sensordaten eines Lidarsensors liefern können, realisierbar, eine Fahrzeugkontur eines Unfallgegners zu berechnen. Damit kann der Einschlagsort des Unfallgegners am Ego-Fahrzeug sowie die Überdeckung der Unfallpartner mit einer höheren Präzision abgeschätzt werden. Nachfolgend wird ein Verfahren beschrieben, mit welchem die Schätzung einer einfachen Bounding Box (Hüllkörper in Form eines Quaders im Raum bzw. eines Rechtecks in der Ebene) zu einer detaillierten Anwendung zur Konturerkennung von entgegenkommenden Fahrzeugen in Pre-Crash Situationen gesteigert werden kann.

Werden heutzutage das Ego-Fahrzeug umgebende Objekte von Umfeldsensoren eines Fahrzeugs erfasst, erfolgt keine Bestimmung der Silhouette sowie der exakten Abmessungen dieser Objekte. Es werden lediglich Bounding Boxes (in der Ebene kleinstmögliches, achsenparalleles Rechteck, das eine vorgegebene Menge von Objekten oder Messpunkten umschließt) um die einzelnen Objekte gelegt, ohne dass auf die genaue Objektform Rücksicht genommen wird. Auf diese Weise gehen wertvolle Informationen über das Objekt respektive ein erkanntes Fahrzeug verloren, die für ein Auslösen passiver Sicherheitselemente wie das Zünden von Rückhaltemitteln relevant sein können.

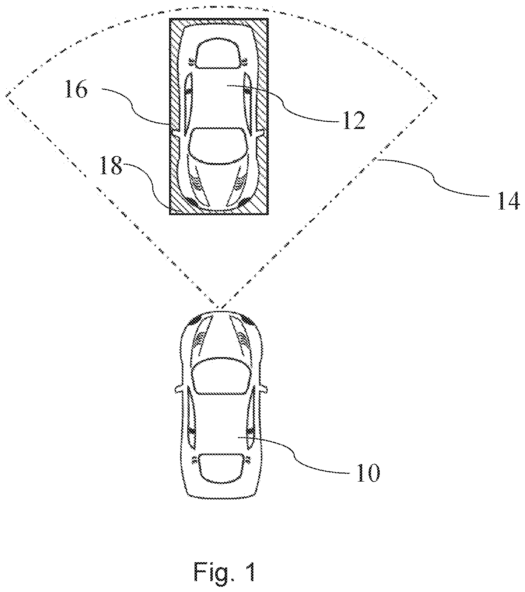

Fig. 1 verdeutlicht das Problem anhand einer vereinfachten Darstellung eines erkannten Fahrzeugs. Das Ziel-Fahrzeug 12 befindet sich im Sichtfeld (von der Strichpunktelinie eingefasstes Kreissegment) bzw. Sensorerfassungsbereich 14 des Ego-Fahrzeugs 10. Der Sensorerfassungsbereich 14 entspricht dem Erfassungsbereich der im Ego-Fahrzeug 10 eingesetzten Umfeldsensorik zum Erfassen von Objekten vor dem Fahrzeug, d.h. in der üblichen Fahrtrichtung. Die Umfeldsensorik weist als Sensoren beispielsweise ein Radar, ein Lidar und/oder eine Kamera auf. Das Ziel-Fahrzeug 12 wird von der Umfeldsensorik als entgegenkommendes Fahrzeug erfasst und in das Umfeldmodell eines Fahrerassistenzsystems des Ego-Fahrzeugs 10 integriert. Diese Integration erfolgt aber nicht in der Form des eigentlichen Ziel-Fahrzeugs, sondern in Form einer Bounding Box 16 (in Fig. 1 dargestellt durch ein schwarzes Rechteck 16 um das Ziel-Fahrzeug 12). Das Ziel-Fahrzeug 12 wird dementsprechend als größeres und ungenaueres Objekt 16 im System hinterlegt, als es in Wirklichkeit ist. Dieser Fehler ist als schwarz-weiß gestreifte Fläche 18 um das Ziel-Fahrzeug 12 dargestellt.

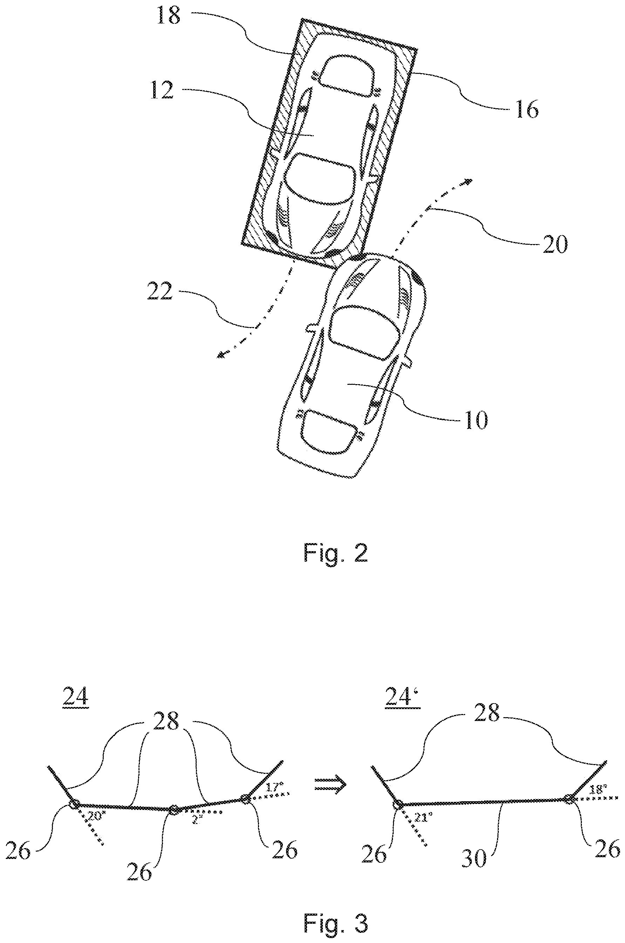

Soll nun ein Element der passiven Sicherheit ausgelöst werden, kann es infolge der überdimensionierten Annahme des Ziel-Fahrzeugs 12 zu Fehlauslösungen kommen. Es wird eine bevorstehende Kollision einschließlich einer Crashkonstellation und -schwere auf Grund der Überschneidung der Konturen zwischen der Bounding Box 16 und dem Ego-Fahrzeug 10 prädiziert, weshalb die passiven Sicherheitselemente, insbesondere die Rückhaltemittel aktiviert werden. In der Realität kann es jedoch zu einer ganz anderen Crashkonstellation und damit Crashschwere kommen, bis hin zur vollständigen Unfallvermeidung durch Vorbeifahrt. Die Kollision findet also unter Umständen nicht statt, obwohl sich beide Fahrzeugobjekte 10 und 12 in der Prädiktion treffen (Überschneidung der Bounding Box 18 des Ziel-Fahrzeugs 12 mit dem Ego-Fahrzeug 10, aber keine Überschneidung der reellen Fahrzeugkonturen der Fahrzeuge 10 und 12). Dies ist in Fig. 2 beispielhaft veranschaulicht: die Trajektorie 20 des Ego-Fahrzeugs 10 führt an der Trajektorie 22 des Ziel-Fahrzeugs 22 vorbei, so dass es faktisch nicht zum einem Crash zwischen beiden Fahrzeugen 10 und 12 kommt. Allerdings prädiziert das Fahrerassistenzsystem einen Crash, da es nur die Bounding box 16 des Ziel-Fahrzeugs 12 berücksichtigt, und diese mit dem linken Kotflügel des Ego-Fahrzeugs 10 bei der Prädiktion vorne kollidiert.

Fehlauslösungen, verursacht durch die Anwendung dieser vereinfachten "Bounding Box"-Methode ohne exakte Konturbestimmung, können für ein sicheres Pre-Crash Auslösen von Aktoren passiver Sicherheitselemente nicht toleriert werden. Die Kenntnis über die genaue Kontur des Ziel-Fahrzeugs 12 ist folglich sicherzustellen. Wie dieses technische Problem durch das hierin vorgestellte Verfahren zur Konturerkennung von entgegenkommenden Fahrzeug in Pre-Crash Situationen gelöst werden kann, wird nachfolgend erläutert.

Wie bereits dargelegt ist das Ziel eine möglichst exakte Konturschätzung eines entgegenkommenden Fahrzeugs in der Pre-Crash Phase. Diese exakte Berechnung erfüllt der nachfolgend beschriebene Algorithmus in insbesondere vier aufeinanderfolgenden Schritten "Erzeugen einer konvexen Hülle um das Objekt", "Bestimmen der ausschlaggebenden Eckpunkte", "Klassifizierung der Fahrzeugfront und -seite" sowie einer abschließenden "Komplementierung der vollständigen Fahrzeugform über die Schätzung einer Mittelachse". Der letzte Schritt des Komplementierens ist optional und dient vor allem der Erhöhung der Genauigkeit der Konturerkennung.

### Erzeugung einer konvexen Hülle um das Objekt

Als Grundlage der konvexen Hülle wird auf den bekannten Graham-Scan-Algorithmus zurückgegriffen, der sich durch seine kurze Laufzeit und hohe Effizienz auszeichnet. Dieser Algorithmus wurde 1972 von dem Mathematiker Ronald Lewis Graham vorgestellt. Hierbei muss zuerst ein Startpunkt Po definiert werden, wobei immer der Punkt mit der kleinsten Ordinate und Abszisse genommen wird, da dieser bei diesem Verfahren zwangsläufig einen Eckpunkt darstellen muss. Nun werden alle anderen Punkte aufsteigend nach dem Winkel zwischen Po und der x-Achse gegen den Uhrzeigersinn geordnet. Nun wird getestet, ob drei Punkte ein positiv orientiertes Dreieck bilden, was über eine Determinante geprüft wird. Ist dies der Fall, werden die äußeren Linien dieses Dreiecks als Außenhülle festgelegt. Wenn ein Dreieck negativ orientiert ist, wird die Berechnung neu gestartet, wobei der mittlere Punkt übersprungen wird. Dieses Vorgehen wird solange wiederholt, bis der Startpunkt wieder erreicht ist und infolgedessen die konvexe Hülle vervollständigt wurde. Abschließend wird die Verbindung zwischen den Punkten mit der niedrigsten und höchsten x-Abszisse gelöscht, um nur die Form zu erhalten, die auch vom Lidar gesehen werden kann. Die so erhaltene konvexe Hülle entspricht nun einem Polygonzug, in dem Paare von Raumpunkten, welche die Hülle definieren, durch Verbindungsstrecken bzw. - geraden miteinander verbunden sind.

### Bestimmen der relevanten bzw. ausschlaggebenden Eckpunkte

Im nächsten Schritt werden aus dem Polygonzug Eckpunkte herauskristallisiert, aus welchen die Schätzung der genauen Fahrzeugkontur aufgebaut und die Fahrzeuglängsachse abgeleitet wird (relevante bzw. ausschlaggebende Eckpunkte bzw. Raumpunkte). Da die Lidar Punktwolke eine immense Datenmenge darstellt, der Großteil davon allerdings nicht verwendet wird, werden an dieser Stelle die Messdaten reduziert. Auf der einen Seite werden alle Punkte innerhalb der konvexen Hülle gelöscht, auf der anderen alle Punkte, bei denen die Verbindungsstrecken bzw. -geraden eines Raumpunktes des Polygonzuges einen vernachlässigbar kleinen Winkel aufweisen, d.h. in einem vernachlässigbar kleinen Winkel zueinanderstehen.

Dies ist an einem in Fig. 3 dargestellten Beispiel eines kurzen Polygonzuges vor 24 und nach 24' einer Bestimmung der relevanten bzw. ausschlaggebenden Eckpunkte verdeutlicht: links in Fig. 3 ist ein Polygonzug 24 mit drei Eckpunkten 26 dargestellt. Die Verbindungsgeraden 28 der Eckpunkte stehen im linken Eckpunkt in einem Winkel von 20°, im mittleren Eckpunkt in einem Winkel von 2° und im rechten Eckpunkt in einem Winkel von 17° zueinander. In diesem Beispiel ist Grenze für die Winkel bei 2° festgelegt. Das bedeutet, dass der Algorithmus nur Eckpunkte als ausschlaggebend bzw. relevant klassifiziert, wenn die einen Eckpunkt durchstoßenden Geraden in einem Winkel > 2° zueinanderstehen. Dadurch werden alle Eckpunkte gelöscht, bei denen die durchstoßenden Geraden in einem Winkel von <=2° zueinanderstehen. In dem in Fig. 3 gezeigten Beispiel wird daher vom Algorithmus der mittlere Eckpunkt gelöscht, und der linke und rechte Eckpunkt werden wieder miteinander durch eine neue Gerade 30 verbunden, so dass der transformierte Polygonzug 24' rechts in Fig. 3 entsteht.

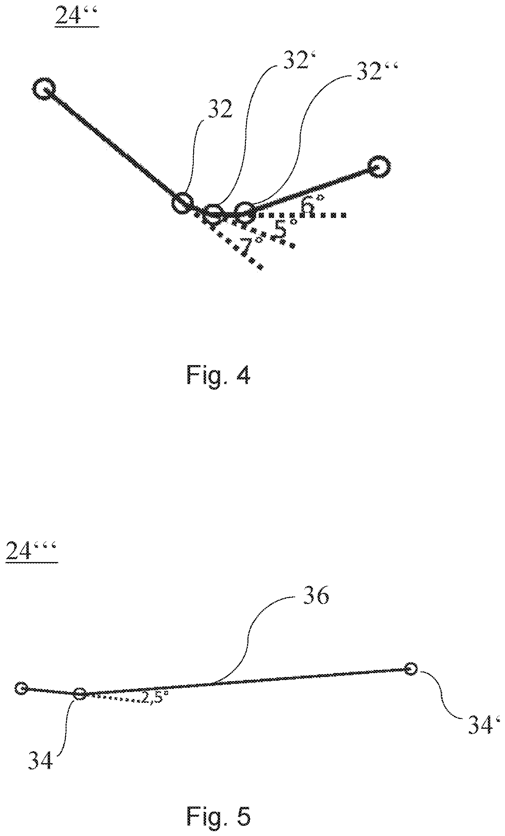

Im Folgenden werden aus den übrigen Messpunkten die relevanten Eckpunkte definiert. Zu diesem Zweck wird geprüft, ob sie einer der folgenden Bedingungen genügen, insbesondere absteigend geordnet von a) nach c). Wenn ein Punkt bereits als Eckpunkt definiert wurde, kann vorgesehen sein, dass die weiteren Bedingungen nicht mehr erfüllt sein müssen. Anzumerken ist noch, dass die beiden Punkte mit der niedrigsten und höchsten x-Abszisse automatisch Eckpunkte darstellen.
a) Änderung über großen Winkel
   Große Winkeländerung an der Struktur von Fahrzeugen kommen Hand in Hand mit ausgeprägten Radiusänderungen wie beispielsweise der Übergang von den Lichtern zu den Kotflügeln. Deswegen wird an Orten, die einen Winkelübergang größer als beispielsweise 20° besitzen ein Eckpunkt erzeugt.
b) Summierte kleine Winkel
   Diese Betrachtung zielt hauptsächlich auf die Übergänge zwischen Kühlergrill des Fahrzeugs und den Lichtern ab. Hierzu werden alle Punkte, die innerhalb einer festgelegten Länge (beispielsweise 20 cm) liegen, auf ihre Winkeländerung untersucht und die einzelnen Werte aufsummiert. Liegt diese Summe beispielsweise oberhalb eines Grenzwerts von 17,5°, wird auf diesem Teilstück ein Eckpunkt definiert. Die Koordinaten dieses Punkts errechnen sich aus den arithmetischen Mittelwerten aller beteiligten Punkte. Ein Beispiel ist in Fig. 4 gezeigt: im dargestellten Polygonzug 24" liegen etwas in der Mitte drei Eckpunkte 32, 32', 32" auf einer festgelegten Länge. Die Verbindungsgeraden, die diese Eckpunkte durchstoßen, stehen in Winkeln von 7°, 5° und 6° zueinander. Die Summe der Winkel beträgt 18° und liegt oberhalb des oben beispielhaft angeführten Grenzwertes von 17,5°, so dass auf dem die drei Eckpunkte 32, 32', 32" umfassenden Teilstück des Polygonzugs 24" ein Eckpunkt definiert werden kann.
c) Gewichtung über Linienlänge
   Für die Seitenstrukturen eines Fahrzeugs ist eine Definition von Eckpunkten allein über den Winkel zwischen den Geraden auf Grund der vorherigen Filterung häufig nicht ausreichend. Deswegen kann es erforderlich sein, die Länge der anliegenden Geraden in die Ermittlung miteinzubeziehen. Dazu wird der Winkel mit der Geraden multipliziert und infolgedessen gewichtet. Wird hierbei wieder ein Grenzwert (beispielsweise 8°m) überschritten, wird der Punkt als Eckpunkt bestimmt. Fig. 5 zeigt ein Beispiel: die Länge der Geraden 36 zwischen den beiden Punkten 34 und 34' wird mit dem Winkel 2,5°, den die den Eckpunkt 34 durchstoßenden Geraden einschließen, multipliziert. Der so erhaltene Wert wird mit einem Grenzwert verglichen; wenn der Grenzwert überschritten wird, wird der Punkt 34 als Eckpunkt klassifiziert, andernfalls gelöscht.

Für den Fall, dass das Ziel-Fahrzeug dem Ego-Fahrzeug absolut frontal entgegenkommt, ist die Klassifizierung der Fahrzeugfrontstruktur bereits möglich. Fährt das Ziel-Fahrzeug unter einem Winkel auf das Ego-Fahrzeug zu, kann zusätzlich eine Fahrzeugseite klassifiziert werden. Dies geschieht unter Berücksichtigung der Bewegungshistorie des getrackten Fahrzeugs.

### Klassifizierung der Fahrzeugfront und -seite

Nach der Bestimmung der Eckpunkte liegt die Kontur nun vereinfacht auf einer Basis von beispielsweise sechs bis acht Punkten vor. Hieraus lassen sich nun die Fahrzeugfront, -seite sowie die Scheinwerfer ableiten. Der Hintergrund hierzu ist die gewünschte Bestimmung, in welchem Winkel das Ziel-Fahrzeug gegenüber dem Ego-Fahrzeug orientiert ist.

Zuerst werden dafür alle Linien aufsteigend entsprechend ihrer Länge sortiert. Die beiden längsten Linien werden anschließend mit zwei Parametern *I_{f}* (beispielsweise = 1,60m) für die Front und *Iₛ* (beispielsweise = 0,55m) für die Seite verglichen. Hierbei lassen sich vier Fälle unterscheiden, die eine eindeutige Entscheidung über die sichtbaren Fahrzeugteile mit sich ermöglichen. Diese sind in nachfolgenden Tabelle dargestellt.

| Fall | Bedeutung | Beschreibung |
|---|---|---|
| 1 | Front und Seite sind sichtbar | Die längste Linie ist länger als *l_{f}* und die zweitlängste Linie liegt zwischen *l_{f}* und *Iₛ.* |
| 2 | Nur Front sichtbar | Die längste Linie ist kürzer als *Iₛ*, aber länger als *lf.* Wenn dies die beiden längsten Linien erfüllen, wird die mit dem größeren Winkel zum Ego-Fahrzeug gewählt. |
| 3 | Nur Seite sichtbar | Die längste Linie ist länger als *l_{f}* und die zweitlängste ist kürzer als *Iₛ*. |
| 4 | Keine Seite erkennbar/Lidar gestört | Weder Fall 1,2 oder 3 ist erfüllt. |

Mit den obigen Schritten kann bereits mit relativ hoher Genauigkeit eine Fahrzeugkontur erkannt werden, insbesondere eine Fahrzeugfront und ggf. einer Fahrzeugseite, was gegenüber einer einfachen Bounding box bzw. einem Quader als digitale Repräsentation eines Fahrzeugs eine Verbesserung darstellt, da die mit diesem Verfahren erkannte Fahrzeugkontur genauer der realen Fahrzeugkontur entspricht.

### Komplementierung der vollständigen Fahrzeugform über die Schätzung einer Mittelachse

Mit diesem letzten Schritt kann die Konturerkennung weiter verbessert werden, indem eine nahezu vollständige Fahrzeugform bzw. Fahrzeugsilhouette ermittelt werden kann, auch wenn Teile des Fahrzeugs verdeckt bzw. nicht für einen Lidar-Sensor erkennbar sind. Hierzu wird zunächst die Fahrzeuglängsachse bestimmt. Das Bestimmen der Fahrzeuglängsachse ist notwendig, um die gesamte Fahrzeugsilhouette zu erhalten, wenn ein Teil des Ziel-Fahrzeugs verdeckt oder Teile des Fahrzeugs für die Umfeldsensorik nicht sichtbar sind. Zu diesem Zweck wird durch den Mittelpunkt der erkannten Frontstruktur eine Gerade gelegt, die parallel zu der sichtbaren Fahrzeugseite liegt. An der Mittelachse wird abschließend die dem Ego-Fahrzeug zugewandte Fahrzeugkontur gespiegelt. Die Punkte auf der anderen Seite der Mittelachse werden mit den neuen, gespiegelten Eckpunkten überschrieben.

Bei einem Ziel-Fahrzeug, das sich frontal auf das Ego-Fahrzeug zubewegt, kann ebenfalls die Fahrzeuglängsachse bestimmt werden, mit dem Ziel, die Genauigkeit der Überdeckungsschätzung zu steigern. Eine Orthogonale durch den Mittelpunkt der erkannten Fahrzeugfront definiert in diesem Fall die Längsachse. Über eine zeitabhängige, aufeinanderfolgende Betrachtung des Ziels bzw. eine Bestimmung der Zielparameter Breite und Gierwinkel lässt sich zudem die Genauigkeit der Lage der Mittelachse schrittweise immer weiter steigern.

Die Rückseite des Ziel-Fahrzeugs ist so nicht detailliert bestimmbar, sondern lässt sich einzig über eine Verbindung der hinteren Eckpunkte erstellen. Dies ist durch die nicht vorhandene Sichtbarkeit für den Lidar zu begründen. Ein Problem ist an dieser Stelle aber nicht festzumachen, da die genaue Form der Fahrzeugrückseite keine Rolle im Unfallgeschehen spielt.

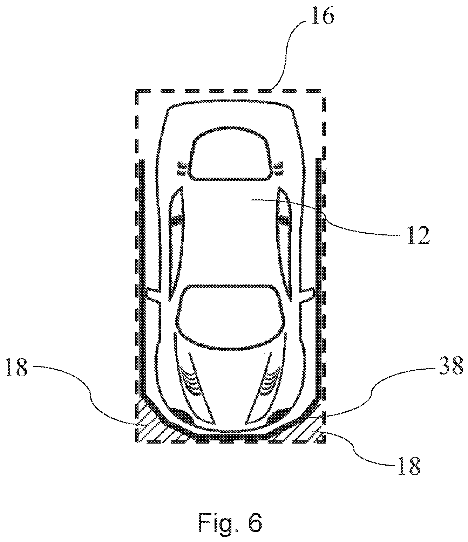

Am Ende steht somit eine vollständige Konturschätzung des Ziel-Fahrzeugs, wie in Fig. 6 beispielhaft anhand der Umrandung 38 um das Ziel-Fahrzeug 12 veranschaulicht ist.

Gleichzeitig zeigt Fig. 6 auch den großen Vorteil gegenüber heutigen Systemen. Das Ziel-Fahrzeug 12 wird mit dem neuen Verfahren deutlich genauer erkannt als bisher, wodurch die mit einer Bounding Box 16 geschätzten entstehenden überhängenden Bereiche 18 (schraffierte Fläche) entfallen. Die durch die Bereiche 18 entstehenden Unsicherheiten, welche zu Fehlauslösungen führen können, sind vollständig aufgehoben, womit die Sicherheit der Unfallprädiktion signifikant gesteigert werden kann. Somit kann dieser Algorithmus zur verbesserten Konturerkennung von Unfallpartnern in einer Pre-Crash Phase ein wesentliches Problem bei der Aktivierung passiver Sicherheitsaktuatoren (unnötige Auslösungen, Fehlauslösungen) beheben.

## Patentansprüche

1. Computer-implementiertes Verfahren zur Konturerkennung eines Fahrzeugs (12) anhand von Messdaten einer Umfeldsensorik, wobei die Messdaten eine Menge von Raumpunkten eines von der Umfeldsensorik erfassten Objekts aufweisen, wobei das Verfahren folgendes aufweist:
• Erzeugen einer Hülle um das Objekt in Form eines Polygonzuges anhand der Menge von Raumpunkten;
• Reduzieren der Menge von Raumpunkten durch Löschen aller innerhalb der Hülle befindlicher Raumpunkte, Entfernen von Raumpunkten aus dem Polygonzug, die für die Konturerkennung eines Fahrzeugs irrelevant sind, und Bestimmen von Raumpunkten des Polygonzuges, die für die Konturerkennung eines Fahrzeugs relevant sind;
• Klassifizieren von einer oder mehreren Kanten des Polygonzugs als zu einer Front und Seite eines Fahrzeugs gehörig anhand der reduzierten Menge von Raumpunkten; wobei
• das Entfernen von Raumpunkten aus dem Polygonzug, die für die Konturerkennung eines Fahrzeugs irrelevant sind, folgendes aufweist: Löschen von Raumpunkten (26) auf der Hülle, deren Verbindungsgeraden (28) zu benachbarten Raumpunkten (26) des Polygonzuges (24) in einem Winkel zueinanderstehen, der kleiner oder gleich einem vorgegebenen Winkel von insbesondere 2° ist, und Verbinden (30) der mit dem gelöschten Raumpunkt verbundenen Raumpunkte (26) im Polygonzug (24').

2. Verfahren nach Anspruch 1,
**dadurch gekennzeichnet, dass**
es folgendes aufweist:
Komplementieren einer vollständigen Form (38) eines Fahrzeugs über die Schätzung einer Mittelachse des Fahrzeugs anhand der klassifizierten Kanten.

3. Verfahren nach Anspruch 1 oder 2,
**dadurch gekennzeichnet, dass**
das Erzeugen einer Hülle um das Objekt in Form eines Polygonzuges anhand der Menge von Raumpunkten das Durchführen eines Graham-Scan-Algorithmus auf die Menge von Raumpunkten aufweist.

4. Verfahren nach Anspruch 1,
**dadurch gekennzeichnet, dass**
das Bestimmen von Raumpunkten des Polygonzuges, die für die Konturerkennung eines Fahrzeugs relevant sind, mindestens eines der folgenden aufweist:
• Bestimmen eines Raumpunktes als relevant, wenn seine Verbindungsgeraden zu benachbarten Raumpunkten des Polygonzuges in einem Winkel zueinanderstehen, der größer als ein vorgegebener Winkel von insbesondere 20° ist;
• Bestimmen eines Raumpunktes als relevant, wenn für den Raumpunkt und mehrere zu ihm benachbarte Raumpunkte im Polygonzug die Summe der Winkel, in dem Verbindungsgeraden zu benachbarten Raumpunkten des Polygonzuges zueinanderstehen, größer als ein vorgegebener Winkel von insbesondere 17,5° ist;
• Bestimmen eines Raumpunktes als relevant, wenn der Winkel, in dem Verbindungsgeraden zu benachbarten Raumpunkten des Polygonzuges zueinanderstehen, multipliziert mit der Länge wenigstens einer der Verbindungsgeraden einen vorgegebenen Wert von insbesondere 8°m überschreitet.

5. Verfahren nach einem der vorhergehenden Ansprüche,
**dadurch gekennzeichnet, dass**
das Klassifizieren von einer oder mehreren Kanten als zu einer Front und Seite eines Fahrzeugs gehörig anhand der reduzierten Menge von Raumpunkten folgende Schritte aufweist:
• Sortieren der Verbindungsgeraden der reduzierten Menge der Raumpunkte des Polygonzuges entsprechend ihrer Länge,
• Vergleichen der beiden längsten Verbindungsgeraden mit einem Front-Parameter *I_{f}* und einem Seiten-Parameter *Iₛ*, und
• Bestimmen, ob Front und/oder Seite eines Fahrzeugs sichtbar ist bzw. sind.

6. Verfahren nach Anspruch 5,
**dadurch gekennzeichnet, dass**
das Bestimmen, ob Front und/oder Seite eines Fahrzeugs sichtbar ist bzw. sind, mindestens eines der folgenden aufweist:
• Bestimmen, dass Front und Seite sichtbar sind, wenn die längste Verbindungslinie länger als der Front-Parameter *I_{f}* ist und die zweitlängste Verbindungslinie zwischen dem Front-Parameter *I_{f}* und dem Seiten-Parameter *Iₛ* liegt;
• Bestimmen, dass nur die Front sichtbar ist, wenn längste Verbindungslinie kürzer als der Seiten-Parameter *Iₛ*, aber länger als der Front-Parameter *I_{f}* ist;
• Bestimmen, dass nur die Seite sichtbar ist, wenn die längste Verbindungslinie länger als der Front-Parameter *I_{f}* ist und die zweitlängste Verbindungslinie kürzer als der Seiten-Parameter *Iₛ* ist.

7. Verfahren nach Anspruch 5 oder 6,
**dadurch gekennzeichnet, dass**
das Komplementieren einer vollständigen Form eines Fahrzeugs über die Schätzung einer Mittelachse des Fahrzeugs anhand der klassifizierten Kanten folgende Schritte aufweist:
• Erzeugen einer Mittelachse durch Legen einer Geraden durch den Mittelpunkt einer klassifizierten Front eines Fahrzeugs derart, dass die Gerade etwa parallel zu einer klassifizierten Seite des Fahrzeugs liegt,
• Spiegeln der klassifizierten Front und Seite des Fahrzeugs an der Mittelachse, und
• Überschreiben von Raumpunkten auf der Seite der Mittelachse, auf die gespiegelt wurde, durch die gespiegelten Raumpunkte.

8. Verfahren nach einem der vorhergehenden Ansprüche,
**dadurch gekennzeichnet, dass**
es zyklisch ausgeführt wird und durch Auswertung der komplementierten vollständigen Formen des Fahrzeugs eine Trajektorie des Fahrzeugs ermittelt wird.

9. Sicherheitssystem für ein Fahrzeug, wobei das Sicherheitssystem zum Ausführen eines Verfahrens nach einem der vorhergehenden Ansprüche und zur Ansteuerung von mindestens einem der nachfolgenden Elemente abhängig von der erkannten Kontur des Fahrzeugs ausgebildet ist: mindestens ein passives Sicherheitselement, insbesondere ein Airbag, ein Gurtstraffer; mindesten ein aktives Sicherheitselement, insbesondere ein Bremsassistenzsystem, ein aktive Lenkvorrichtung, ein Antiblockiersystem, ein Fahrdynamikregelsystem.

10. Sicherheitssystem nach Anspruch 9,
**dadurch gekennzeichnet, dass**
es ausgebildet ist, abhängig von der erkannten Kontur des Fahrzeugs die Wahrscheinlicht für einen Unfall mit dem Fahrzeug abzuschätzen und abhängig von der Abschätzung das Auslösen des mindestens einen Elements zu steuern.

## Claims

1. Computer-implemented method for detecting the contour of a vehicle (12) based on measurement data of a surroundings sensors system, wherein the measurement data include a set of spatial points of an object captured by the surroundings sensor system, wherein the method includes the following:
• generating an envelope around the object in the form of a polygonal chain on the basis of the set of spatial points;
• reducing the set of spatial points by deleting all spatial points that are located inside the envelope, removing spatial points from the polygonal chain that are irrelevant for detecting the contour of a vehicle, and determining spatial points of the polygonal chain that are relevant for detecting the contour of a vehicle;
• classifying one or more edges of the polygonal chain as belonging to a front and side of a vehicle on the basis of the reduced set of spatial points; wherein
• removing spatial points from the polygonal chain that are irrelevant for detecting the contour of a vehicle includes the following: deleting spatial points (26) on the envelope whose straight connecting lines (28) to adjacent spatial points (26) of the polygonal chain (24) enclose an angle that is smaller than or equal to a specified angle of in particular 2°, and connecting (30) the spatial points (26) in the polygonal chain (24') that are connected to the deleted spatial point.

2. Method according to Claim 1,
**characterized in that**
said method includes the following:
complementing a complete shape (38) of a vehicle by estimating a central axis of the vehicle on the basis of the classified edges.

3. Method according to Claim 1 or 2,
**characterized in that**
generating an envelope around the object in the form of a polygonal chain on the basis of the set of spatial points includes carrying out a Graham's scan algorithm for the set of spatial points.

4. Method according to Claim 1,
**characterized in that**
the determination of spatial points of the polygonal chain that are relevant for detecting the contour of a vehicle includes at least one of the following:
• determining a spatial point as relevant if its straight connecting lines to adjacent spatial points of the polygonal chain enclose an angle that is greater than a specified angle of in particular 20°;
• determining a spatial point as relevant if, for the spatial point and a plurality of adjacent spatial points in the polygonal chain, the sum of the angles enclosed by straight connecting lines to adjacent spatial points of the polygonal chain is greater than a specified angle of in particular 17.5°;
• determining a spatial point as relevant if the angle enclosed by straight connecting lines to adjacent spatial points of the polygonal chain, multiplied by the length of at least one of the straight connecting lines, exceeds a specified value of in particular 8°m.

5. Method according to one of the preceding claims,
**characterized in that**
the classification of one or more edges as belonging to a front and side of a vehicle on the basis of the reduced set of spatial points includes the following steps:
• sorting the straight connecting lines of the reduced set of spatial points of the polygonal chain by their lengths;
• comparing the two longest straight connecting lines with a front parameter *I_{f}* and a side parameter *Iₛ*; and
• determining whether the front and/or side of a vehicle is/are visible.

6. Method according to Claim 5,
**characterized in that**
the determination of whether the front and/or side of the vehicle is/are visible includes at least one of the following:
• determining that the front and side are visible when the longest connecting line is longer than the front parameter *If* and the second longest connecting line lies between the front parameter *If* and the side parameter *Iₛ*;
• determining that only the front is visible if the longest connecting line is shorter than the side parameter *Iₛ* but longer than the front parameter *I_{f},*
• determining that only the side is visible if the longest connecting line is longer than the front parameter *If* and the second longest connecting line is shorter than the side parameter *Iₛ*.

7. Method according to Claim 5 or 6,
**characterized in that**
the complementing of a complete shape of a vehicle by estimating a central axis of the vehicle on the basis of the classified edges includes the following steps:
• generating a central axis by placing a straight line through the centre point of a classified front of a vehicle in a manner such that the straight line is approximately parallel to a classified side of the vehicle,
• mirroring the classified front and side of the vehicle at the central axis, and
• overwriting spatial points on the side of the central axis to which mirroring was performed with the mirrored spatial points.

8. Method according to one of the preceding claims,
**characterized in that**
said method is performed cyclically and a trajectory of the vehicle is ascertained by evaluating the complemented complete shapes of the vehicle.

9. Safety system for a vehicle, wherein the safety system is embodied for carrying out a method according to one of the preceding claims and for controlling at least one of the following elements depending on the detected contour of the vehicle: at least one passive safety element, in particular an airbag, a belt tensioner; at least one active safety element, in particular a brake assist system, an active steering apparatus, an anti-lock braking system, an electronic stability control system.

10. Safety system according to Claim 9,
**characterized in that**
said safety system is embodied to estimate, depending on the detected contour of the vehicle, the probability of an accident with the vehicle and to control the triggering of the at least one element depending on the estimation.

## Revendications

1. Procédé mis en œuvre par ordinateur pour la reconnaissance du contour d'un véhicule (12) sur la base de données de mesure d'un système de détection d'environnement, les données de mesure comprenant un ensemble de points de l'espace d'un objet capturé par le système de détection d'environnement, le procédé comprenant les étapes suivantes :
- la création d'une enveloppe autour de l'objet sous la forme d'un tracé polygonal sur la base de l'ensemble de points de l'espace ;
- la réduction de l'ensemble de points de l'espace par suppression de tous les points de l'espace se trouvant à l'intérieur de l'enveloppe, élimination du tracé polygonal des points de l'espace qui ne sont pas pertinents pour la reconnaissance du contour d'un véhicule et détermination de points de l'espace du tracé polygonal qui sont pertinents pour la reconnaissance du contour d'un véhicule ;
- la classification d'un ou de plusieurs bords du tracé polygonal comme appartenant à un avant et un côté d'un véhicule sur la base de l'ensemble réduit de points de l'espace ;
- l'élimination du tracé polygonal de points de l'espace qui ne sont pas pertinents pour la reconnaissance du contour d'un véhicule comprenant les étapes suivantes : la suppression de points de l'espace (26) sur l'enveloppe dont les droites de liaison (28) à des points de l'espace voisins (26) du tracé polygonal (24) forment entre elles un angle qui est inférieur ou égal à un angle prédéfini de notamment 2°, et la liaison (30) des points de l'espace (26) reliés au point de l'espace supprimé dans le tracé polygonal (24').

2. Procédé selon la revendication 1, **caractérisé en ce qu'**il comprend les étapes suivantes :
la complétion d'une forme entière (38) d'un véhicule par l'estimation d'un axe central du véhicule sur la base des bords classifiés.

3. Procédé selon la revendication 1 ou 2, **caractérisé en ce que** la création d'une enveloppe autour de l'objet sous la forme d'un tracé polygonal sur la base de l'ensemble de points de l'espace comprend la réalisation d'un algorithme de Graham sur l'ensemble de points de l'espace.

4. Procédé selon la revendication 1, **caractérisé en ce que** la détermination de points de l'espace du tracé polygonal qui sont pertinents pour la reconnaissance du contour d'un véhicule comprend au moins une des étapes suivantes :
- la détermination d'un point de l'espace comme pertinent lorsque ses droites de liaison à des points de l'espace voisins du tracé polygonal forment entre elles un angle qui est supérieur à un angle prédéfini de notamment 20° ;
- la détermination d'un point de l'espace comme pertinent lorsque, pour le point de l'espace et plusieurs points de l'espace voisins de celui-ci dans le tracé polygonal, la somme des angles que des droites de liaison à des points de l'espace voisins du tracé polygonal forment entre elles est supérieure à un angle prédéfini de notamment 17,5° ;
- la détermination d'un point de l'espace comme pertinent lorsque l'angle que des droites de liaison à des points de l'espace voisins du tracé polygonal forment entre elles, multiplié par la longueur d'au moins une des droites de liaison, dépasse une valeur prédéfinie de notamment 8°m.

5. Procédé selon l'une quelconque des revendications précédentes, **caractérisé en ce que** la classification d'un ou de plusieurs bords comme appartenant à un avant et un côté d'un véhicule sur la base de l'ensemble réduit de points de l'espace comprend les étapes suivantes :
- le tri des droites de liaison de l'ensemble réduit de points de l'espace du tracé polygonal en fonction de leur longueur,
- la comparaison des deux droites de liaison les plus longues à un paramètre avant *I_{f}* et un paramètre latéral *Iₛ*, et
- la détermination de si l'avant et/ou le côté d'un véhicule est ou sont visibles.

6. Procédé selon la revendication 5, **caractérisé en ce que** la détermination de si l'avant et/ou le côté d'un véhicule est ou sont visibles comprend au moins une des étapes suivantes :
- la détermination que l'avant et le côté sont visibles lorsque la droite de liaison la plus longue est plus longue que le paramètre avant *I_{f}* et la deuxième droite de liaison la plus longue est comprise entre le paramètre avant *I_{f}* et le paramètre latéral *Iₛ* ;
- la détermination que seul l'avant est visible lorsque la droite de liaison la plus longue est plus courte que le paramètre latéral *Iₛ*, mais plus longue que le paramètre avant *I_{f}* ;
- la détermination que que seul le côté est visible lorsque la droite de liaison la plus longue est plus longue que le paramètre avant *I_{f}* et la deuxième droite de liaison la plus longue est plus courte que le paramètre latéral *Iₛ*.

7. Procédé selon la revendication 5 ou 6, **caractérisé en ce que** la complétion d'une forme entière d'un véhicule par l'estimation d'un axe central du véhicule sur la base des bords classifiés comprend les étapes suivantes :
- la création d'un axe central en faisant passer une droite par le centre d'un avant classifié d'un véhicule de telle sorte que la droite est approximativement parallèle à un côté classifié du véhicule,
- la réflexion de l'avant et du côté classifiés du véhicule sur l'axe central, et
- l'écrasement de points de l'espace sur le côté de l'axe central sur lequel la réflexion a été effectuée par les points de l'espace réfléchis.

8. Procédé selon l'une quelconque des revendications précédentes, **caractérisé en ce qu'**il est exécuté de manière cyclique et une trajectoire du véhicule est déterminée par évaluation des formes entières complétées du véhicule.

9. Système de sécurité pour un véhicule, le système de sécurité étant configuré pour exécuter un procédé selon l'une quelconque des revendications précédentes et pour commander au moins un des éléments suivants en fonction du contour reconnu du véhicule : au moins un élément de sécurité passif, notamment un airbag, un tendeur de ceinture ; au moins un élément de sécurité actif, notamment un système d'assistance au freinage, un dispositif de direction actif, un système antiblocage, un système de régulation de la dynamique de conduite.

10. Système de sécurité selon la revendication 9, **caractérisé en ce qu'**il est configuré pour estimer, en fonction du contour reconnu du véhicule, la probabilité d'un accident avec le véhicule et pour commander, en fonction de l'estimation, le déclenchement de l'au moins un élément.
